# EUROPÄISCHE PATENTSCHRIFT

(11) **EP 1 327 167 B1**
(45) Veröffentlichungstag und Bekanntmachung des Hinweises auf die Patenterteilung: **14.11.2007**
(21) Anmeldenummer: 01982132.1
(22) Anmeldetag: 24.09.2001
(51) Int. Cl.: G02B 3/08, G02B 17/08

(54) **OPTISCHE KOLLIMIERUNGSOPTIK**
OPTICAL COLLIMATION DEVICE
DISPOSITIF OPTIQUE DE COLLIMATION

(30) Priorität: 17.10.2000 DE 10051464
(43) Veröffentlichungstag der Anmeldung: 16.07.2003
(73) Patentinhaber: Osram Opto Semiconductors GmbH, 93049 Regensburg (DE)
(72) Erfinder: BLÜMEL, Simon, 84069 Schierling (DE)
(74) Vertreter: Epping - Hermann - Fischer
(86) Internationale Anmeldenummer: PCT/DE2001/003677
(87) Internationale Veröffentlichungsnummer: WO 2002/033449

(56) Entgegenhaltungen:
- EP-A- 0 117 606
- EP-A- 0 421 824
- EP-A- 0 977 059
- WO-A-96/31742
- WO-A-99/50596
- DE-A- 3 317 519
- US-A- 5 566 023

## Beschreibung

Die Erfindung betrifft eine Beleuchtungsanordnung nach dem Oberbegriff des Patentanspruchs 1.

Bei Beleuchtungssystemen auf der Basis von LEDs (light emitting diode) werden üblicherweise Linsen zur Kollimierung der emittierten Strahlung verwendet. Für eine effiziente Beleuchtung ist dabei eine große Eintrittsapertur beziehungsweise eine große Lichtstärke der Kollimierungsoptik wünschenswert.

Eine hohe Lichtstärke kann allgemein durch kurzbrennweitige Linsen mit großem Durchmesser erreicht werden. Nachteiligerweise ist damit auch eine große Linsendicke verbunden, die zu schweren, großvolumigen und materialaufwendigen Beleuchtungssystemen führt. Bei sphärischen Linsen liegt ein weiterer Nachteil darin, daß mit wachsendem Abstand von der optischen Achse die Abbildungsfehler zunehmen. Zusätzlich steigen zum Rand der Linse hin die Reflexionsverluste aufgrund des flacher werdenden Eintrittswinkels.

Bei Beleuchtungssystemen mit mehreren Einzel-LEDs als Lichtquelle führen die genannten Abbildungsfehler und Abschattungen in den Randbereichen der einzelnen Kollimationslinsen zu einer inhomogenen Leuchtdichteverteilung. Insbesondere bleiben oftmals die Einzellichtquellen erkennbar, was im Signal- und Beleuchtungsbereich unerwünscht ist.

Eine Verbesserung wird durch sogenannte Fresnel'sche Stufenlinsen erzielt, wie sie beispielsweise aus WO 87/00297 bekannt sind. Bei diesen Stufenlinsen ist die Linsenoberfläche stufenartig in eine Vielzahl von ringförmigen, konzentrischen Zonen unterteilt, so daß eine flachere, materialsparendere Bauweise erreicht wird. Dennoch weisen auch diese Linsen in größerem Abstand zur optischen Achse deutliche Abschattungen auf. Weiterhin ist die Gesamttransmission solcher Linsen durch die Vielzahl von Unstetigkeiten und Kanten auf der Linsenoberfläche limitiert.

In der WO 99/50596 A ist weiterhin eine optische Vorrichtung mit einer Mehrzahl optischer Elemente beschrieben. Die EP 0 977 059 und die DE 33 17 519 beziehen sich jeweils auf ein optisches Einzelelement. In der US 5,566,023 wird eine gestufte Linse mit einer Fresnel-Oberflächenstruktur, die mittels Lithographie hergestellt ist, beschrieben. In der EP 0 421 824 ist ein Gehäusekörper für eine LED dargestellt.

Aufgabe der vorliegenden Erfindung ist es, eine Beleuchtungseinrichtung mit hoher Lichtstärke und austrittsseitig möglichst homogener Leuchtdichteverteilung zu schaffen.

Diese Aufgabe wird durch eine Beleuchtungsanordnung nach Patentanspruch 1 gelöst. Vorteilhafte Weiterbildungen der Erfindung sind Gegenstand der abhängigen Ansprüche.

Erfindungsgemäß ist vorgesehen, eine Beleuchtungsanordnung mit einer optische Vorrichtung mit einer Mehrzahl seitlich aneinandergrenzender optischer Elemente zu bilden, wobei jedem optischen Element eine optische Achse zugeordnet ist und jedes optische Element eine Lichteintrittsfläche und eine Lichtaustrittsfläche aufweist. Die Lichteintrittsfläche ist jeweils in einem die optische Achse umgebenden Zentralbereich nach Art einer Linse gewölbt ausgeführt. Um den Zentralbereich herum ist jeweils ein ringförmiger Reflektor angeordnet. Weiterhin ist seitens der Lichteintrittsfläche eine oberflächenmontierbare Lumineszenzdiode angeordnet.

Mit dem Reflektor werden außerhalb des Zentralbereichs einfallende Strahlungsanteile auf die Lichtaustrittsfläche gerichtet. Mit Vorteil werden so auch die fern von der optischen Achse auf das optische Element auftreffenden Strahlungsanteile mit hoher Effizienz abgebildet.

Der Reflektorring ist aus einer Mehrzahl von Einzelreflektoren gebildet. Durch eine individuelle Ausrichtung der Einzelreflektoren auf die zu reflektierenden Strahlungsanteile werden die Abbildungseigenschaften des Reflektorrings verbessert.

Bevorzugt basiert die Reflexion am Reflektorring beziehungsweise den Einzelreflektoren auf Totalreflexion. Der Reflexionsgrad beträgt hierbei nahezu 100%. Mit Vorteil ist keine reflexionssteigernde Behandlung der Reflektorflächen nötig, da Totalreflexion allein durch eine geeignete Formgebung der optischen Elemente erreicht werden kann.

Bei einer bevorzugten Weiterbildung der Erfindung sind die Zentralbereiche der optischen Elemente als asphärische Linse ausgebildet. Gegenüber einer sphärischen Linse wird damit eine weitgehend verzerrungsfreie, nahezu optimale Abbildung im Zentralbereich erzielt.

Eine vorteilhafte Ausgestaltung der Erfindung besteht darin, die Reflektorflächen ganz oder in Teilbereichen als Oberfläche eines Kegelsegments, eines Kugelsegments, eines Paraboloidsegments oder eines Ellipsoidsegments auszubilden.

Mit Vorteil wird durch ein Paraboloidsegment bei geeigneter Anordnung der auftreffende Strahlungsanteil eines Punktstrahlers näherungsweise in ein Parallelbündel transformiert. Die Abstrahlung als Parallelbündel ist insbesondere im Signalbereich wünschenswert, um das Signal über weite Strecken sichtbar zu machen.

Durch die Ausbildung eines Ellipsoidsegments ist auch eine gezielte Fokussierung des abgebildeten Lichtbündels möglich. Dies kann für bestimmte punktuelle Beleuchtungssysteme von Vorteil sein. Weiterhin wird durch eine leichte Fokussierung ein Überlapp zwischen den Einzellichtquellen zusammengesetzter Beleuchtungssysteme erreicht und damit die Homogenität der Leuchtdichteverteilung des Systems insgesamt verbessert.

Unter einem Paraboloid ist in Erweiterung der geometrischen Definition auch ein exzentrisches Paraboloid zu verstehen. Die Oberfläche eines solchen Körpers ist definiert durch die Rotation einer Parabel, wobei die Rotationsachse parallel und beabstandet (exzentrisch) zur Parabelsymmetrieachse ist. Durch diese Modifikation eines Rotationsparaboloids wird mit Vorteil eine nahezu perfekte Abbildung eines Punktstrahlers in ein Parallelbündel erreicht. Entsprechendes gilt für Ellipsoide, so daß hierunter ebenfalls auch exzentrische Ellipsoide zu verstehen sind.

Ein Paraboloid- oder Ellipsoidsegment kann bei der Erfindung auch durch ein Kugelsegment oder weitergehend durch ein oder mehrere Kegelsegmente angenähert werden. Mit Vorteil erfordern Kugel- und Kegelsegmente einen geringeren Konstruktions- und Herstellungsaufwand.

Zumindest bei einem Teil der optischen Elemente sind die im Zentralbereich ausgebildete Linse und der Reflektor in ihrer Formgebung so aufeinander abgestimmt, daß das von einer Punktlichtquelle emittierte Strahlungsbündel näherungsweise in ein Parallelbündel überführt wird. Dies kann durch eine konfokale Anordnung von Linse und Reflektor erreicht werden. Bei dem aus mehreren Teilflächen zusammengesetzten Reflektor sind die Teilflächen konfokal angeordnet.

Ein weiterer Vorteil der Erfindung besteht darin, daß die bisher beschriebenen Abbildungseigenschaften allein durch die Formgebung der lichteintrittsseitigen Oberfläche bewirkt wird. Insbesondere wird das Strahlungsbündel einer Punktlichtquelle, wie sie zum Beispiel näherungsweise von einer Lumineszenzdiode wie einer LED oder speziell einem LED-Chip gebildet wird, eintrittsseitig in ein Parallelbündel umgewandelt. Das bedeutet, daß das divergente Strahlungsbündel der Punktlichtquelle aufgrund der Brechung an der Lichteintrittsfläche beziehungsweise der Reflexion an den Reflektoren eines optischen Elements in ein Parallelbündel umgewandelt wird. Somit trifft dieses Strahlungsbündel bereits als Parallelbündel auf die Lichtaustrittsfläche. Durch die eintrittsseitige Parallelisierung des Strahlungsbündels wird eine besonders homogene Strahlungsverteilung auf der Lichtaustrittsseite erreicht.

Vorteilhafterweise ist eine Brechung oder eine andere optische Abbildung an der Lichtaustrittsfläche zur Parallelisierung des Strahlungsbündels nicht erforderlich. Dies ermöglicht eine planare Lichtaustrittsfläche und erleichtert die Ausbildung großflächiger optischer Vorrichtungen durch Aneinanderreihung einer Mehrzahl vorzugsweise gleichartiger optischer Elemente.

Die Lichtaustrittsfläche kann nach Art einer Linse sphärisch oder asphärisch gewölbt ausgebildet sein.

Die lichtaustrittsseitige Oberfläche wird für zusätzliche Funktionen genutzt. Diese Oberflächen ist mit einer Rillen-, Noppen- oder Punktstruktur versehen, die eine allseitige Streuung der Strahlung bewirkt und insbesondere für flächige Beleuchtungssysteme von Vorteil ist. Diese Strukturierungen können statistisch verteilt oder regelmäßig angeordnet sein. Eine statistische Verteilung bewirkt eine besonders homogene Leuchtdichteverteilung, eine regelmäßige Strukturierung ist gegebenenfalls leichter herzustellen.

Weiter bevorzugt ist eine Aufrauhung der lichtaustrittsseitigen Oberfläche. Die Aufrauhung wirkt als Diffusor und führt zu einer zusätzlichen Homogenisierung der Leuchtdichteverteilung.

Solche Strukturierungen oder Aufrauhung können für sich oder in Kombination auch in Form von Mustern oder Symbolen auf der lichtaustrittsseitigen Oberfläche angeordnet sein, um bildhafte Beleuchtungseffekte zu erzielen.

Bevorzugt sind die optischen Elemente, insbesondere bezüglich der Reflektorflächen und des linsenartig gewölbeten Zentralbereichs als Rotationskörper ausgebildet. Diese Formgebung entspricht der rotationssymmetrischen Abstrahlcharakteristik einer Punktlichtquelle, beispielsweise einem LED-Chip, so daß damit die gesamte Strahlungskeule gleichartig abgebildet wird. Zur Aneinanderreihung können diese rotationssymmetrischen optischen Elemente durch Stege oder mittels einer gemeinsamen Trägerplatte verbunden werden.

Die Seitenflächen des Rotationskörpers können mit Abflachungen versehen sein, die eine Aneinanderreihung mehrerer optischer Elemente ohne zusätzliche Verbindungselemente ermöglichen. Dies erleichtert insbesondere die Ausbildung großflächiger Vorrichtungen.
Vorzugsweise befinden sich Abflachungen an Stellen, die die Abbildungseigenschaften nicht maßgeblich beeinträchtigen.

Als Material für die optische Vorrichtung wird vorzugsweise ein strahlungsdurchlässiger Kunststoff verwendet. Beispielsweise eignen sich Reaktionsharze, die gegebenenfalls auch eingefärbt sein können. Besonders bevorzugt sind hierbei PC (Polykarbonat) oder Acrylate wie PMMA (Polymethylmethacrylat). Diese Materialien können im Spritzgußverfahren verarbeitet werden, wodurch eine einfache und kostengünstige Möglichkeit zur Herstellung des optischen Elements gegeben ist. Auch Gläser können als Material für die optische Vorrichtung verwendet werden.

Bei einer bevorzugten Weiterbildung der Erfindung sind im Fokalbereich eines optischen Elements eine oder mehrere Lumineszenzdioden positioniert, so daß die Lumineszenzdioden und die optische Vorrichtung die Beleuchtungsanordnung bilden.

Die Bezeichnung Lumineszenzdiode umfaßt hierbei Leuchtdioden, Lichtemissiondiode, LEDs in Form von LED-Chips und LED-Bauelementen und Laserdioden. Ein LED-Bauelement weist insbesondere einen oder mehrere LED-Chips auf, die auf einen Träger oder in ein Gehäuse montiert sind. Bei der Erfindung werden oberflächenmontierbare Lumineszenzdioden verwendet, die besonders bevorzugt auf eine gemeinsamen Trägerplatte, beispielsweise einer Platine, motiert sind.

Weitergehend können mehrere optische Elemente seitlich aneinandergereiht zu größeren, beispielsweise matrixartig, Beleuchtungssystemen zusammengefügt werden. Die so gebildeten Beleuchtungsanordnungen zeichnen sich durch hohe Effizienz, eine lange Lebensdauer und große Zuverlässigkeit aus.

Weitere Merkmale, Vorzüge und Zweckmäßigkeiten der Erfindung ergeben sich aus der nachfolgenden Beschreibung von vier Ausführungsbeispielen in Verbindung mit den Figuren 1 bis 4.

Es zeigen
- Figur 1a: eine schematische Schnittansicht eines ersten nicht beanspruchten, Ausführungsbeispiels eines optischen Elements und
- Figur 1b: eine schematische Schnittansicht eines ersten, nicht beanspruchten, Ausführungsbeispiels einer damit gebildeten optischen Vorrichtung für eine erfindungsgemäße Beleuchtungsanordnung,
- Figur 2a: eine schematische Schnittansicht eines zweiten Ausführungsbeispiels eines optischen Elements und
- Figur 2b: eine schematische Schnittansicht eines zweiten Ausführungsbeispiels einer damit gebildeten optischen Vorrichtung für eine erfindungsgemäße Beleuchtungsanordnung,
- Figur 3: eine schematische Teilschnittansicht eines dritten Ausführungsbeispiels eines optischen Elements für eine optische Vorrichtung,
- Figur 4a: eine schematische perspektivische Teilschnittansicht eines vierten nicht beanspruchten Ausführungsbeispiels eines optischen Elements,
- Figur 4b: eine schematische Aufsicht auf ein viertes Ausführungsbeispiel einer damit gebildeten optischen Vorrichtung und
- Figur 4c: eine schematische perspektivische Teilschnittansicht eines fünften nicht beanspruchten Ausfürungsbeispiels eines optischen Elements für eine optische Vorrichtung.

Gleiche oder gleich wirkende Teile sind hierbei mit den selben Bezugszeichen versehen.

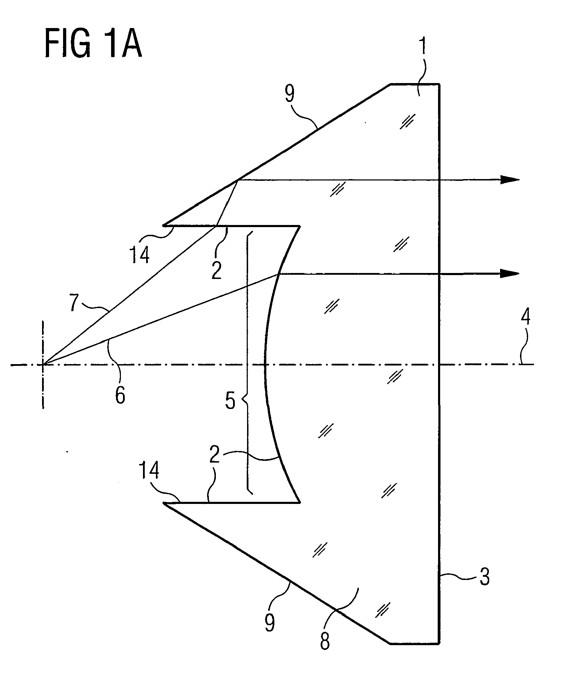

In Figur 1a ist ein nicht beanspruchtes Ausführungsbeispiel eines optischen Elements dargestellt, dessen Grundkörper 1 eine in einen Zentralbereich 5 und einen Randbereich 14 unterteilte Lichteintrittsfläche 2 und eine plane Lichtaustrittsfläche 3 aufweist. Mittig durch den Grundkörper 1 beziehungsweise dessen Zentralbereich 5 verläuft die optische Achse 4. In dem Zentralbereich 5 ist die Oberfläche nach Art einer herkömmlichen Linse sphärisch oder vorzugsweise asphärisch geformt. Die in dem Zentralbereichs 5 auftreffenden Strahlungsanteile 6 werden durch Brechung an der gewölbten Oberfläche abgebildet.

Der Zentralbereich 5 ist von einem im Schnitt sägezahnförmigen Reflektorring 8 umgeben. Die hier auftreffende Strahlung 7 wird an der Innenflanke 14 des Reflektorrings 8 gebrochen und an der Außenfläche 9 des Grundkörpers 1 totalreflektiert. Diese Reflektorfläche 9 ist so angeordnet, daß die auftreffende Strahlung im wesentlichen in derselben Weise wie die Strahlung im Innenbereich 5 abgebildet wird.

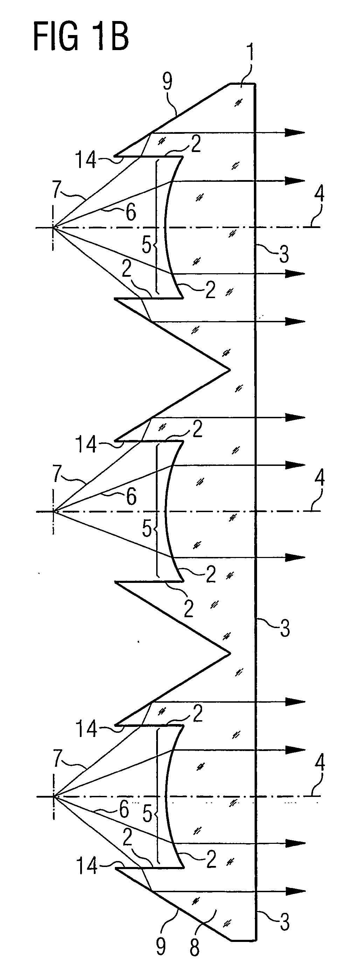

Das in Figur 1b dargestellte nicht beanspruchte Ausführungsbeispiel einer optischen Vorrichtung ist durch seitliche Aneinanderreihung von drei optischen Elementen gemäß Figur 1a gebildet, wobei die Lichtaustrittsflächen 3 der optischen Elemente in einer gemeinsamen Ebene angeordnet sind. Entsprechend sind die optischen Achsen 4 zueinander parallel ausgerichtet.

Selbstverständlich kann eine optische Vorrichtung auch mit einer anderen Zahl von optischen Elementen gebildet werden. Zur Ausbildung einer großflächigen optischen Vorrichtung ist eine entsprechende zweidimensionale Anordnung in Form einer Matrix von optischen Elementen zweckmäßig.

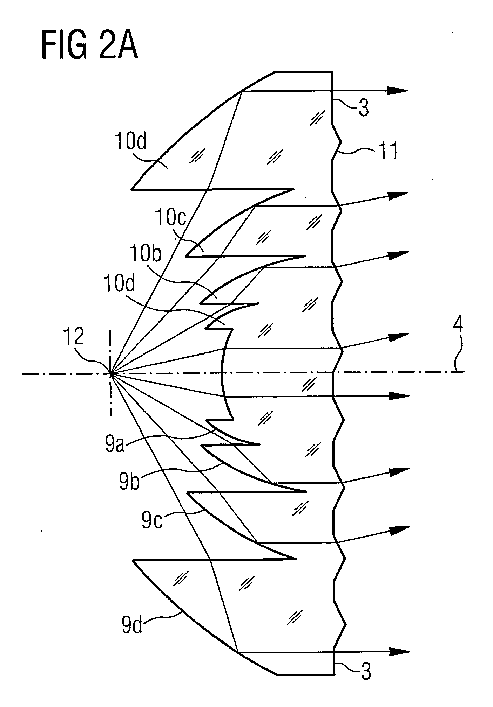

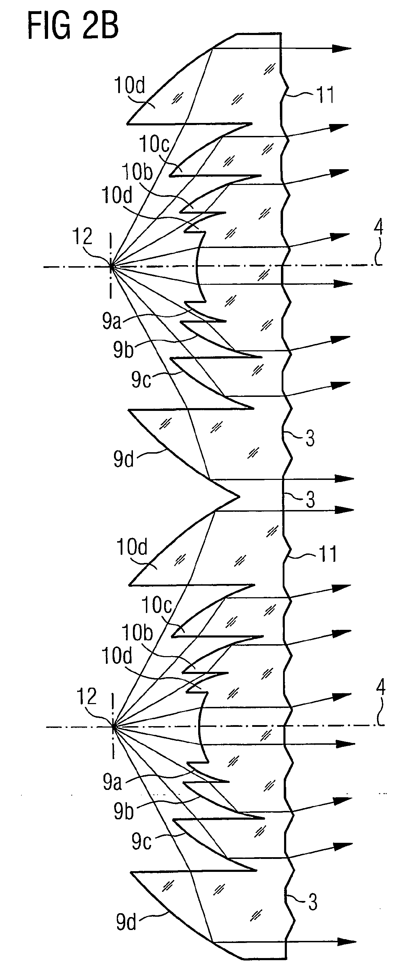

Das in Figur 2a dargestellte Ausführungsbeispiel eines optischen Elements unterscheidet sich von dem in Figur 1a gezeigten Ausführungsbeispiel dadurch, daß das optische Element eine Mehrzahl von ringförmigen Einzelreflektoren 10a bis 10d aufweist, die konzentrisch angeordnet sind. Die Einzelreflektoren 10a bis 10d sind wie im vorigen Beispiel als Totalreflektoren ausgebildet, wobei die zugehörigen totalreflektierenden Flächen 9a bis 9d in Figur 2 jeweils als Oberflächensegmente eines Rotationsparaboloids gestaltet sind. Damit wird näherungsweise die Strahlung eines Punktstrahlers wie zum Beispiel eines LED-Chips in ein Parallelbündel transformiert.

Weiterhin ist auf der lichtaustrittsseitigen Oberfläche 3 eine Noppenstruktur 11 in Form flacher Pyramiden ausgebildet, die eine unregelmäßige Streuung des Parallelbündels und so eine gleichmäßige Leuchtdichteverteilung bewirkt.

Das in Figur 2b dargestellte Ausführungsbeispiel einer optischen Vorrichtung ist wiederum durch seitliche Aneinanderreihung von optischen Elementen gemäß Figur 2a gebildet, wobei die Lichtaustrittsflächen 3 der optischen Elemente in einer gemeinsamen Ebene angeordnet beziehungsweise die optischen Achsen 4 zueinander parallel ausgerichtet sind.

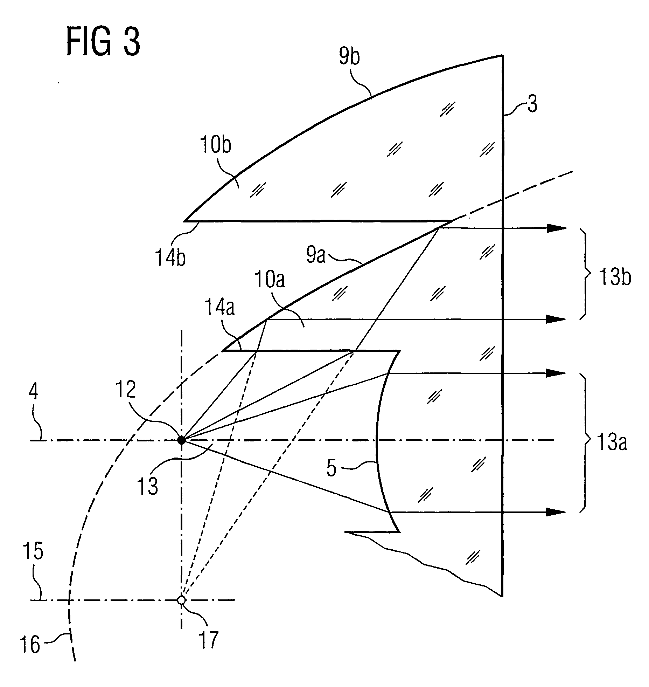

Bei dem in Figur 3 dargestellten Ausführungsbeispiel eines optischen Elements ist die Reflektorfläche 9 des optischen Elements aus Oberflächensegmenten 9a, 9b exzentrischer Rotationsparaboloide zusammengesetzt. Die Teilflächen sind so aufeinander abgestimmt, daß die auftreffenden Strahlungsanteile einer Punktlichtquelle in Teile eines Parallelbündels transformiert werden. Die Bemessung des optischen Elements ergibt sich aus folgendem Zusammenhang:
Das von der Punktlichtquelle 12, beispielsweise einem LED-Chip, emittierte Strahlungsbündel 13 zerfällt in ein Hauptbündel 13a und mehrere Nebenbündel, von denen der Übersichtlichkeit halber nur eines dargestellt ist, 13b. Die Lichtquelle 12 ist im Fokus der im Zentralbereich 5 ausgebildeten Linse angeordnet, so daß das Hauptstrahlungsbündel 13a in ein Parallelbündel abgebildet wird.

Das Nebenbündel 13b wird zunächst an der Innenflanke 14a des ersten Reflektorrings 10a gebrochen. Dadurch entsteht gegenstandsseitig eine virtuelle Lichtquelle 17, deren Position sich aus dem Brechungsgesetz ergibt. Die Reflektorteilfläche 9a des ersten Reflektorrings 10a ist als Oberflächensegment eines exzentrischen Paraboloids gebildet. Die Oberfläche dieses Paraboloids ist durch die Rotation einer Parabel 16 definiert, deren Symmetrieachse 15 parallel zu optischen Achse 4 ist und deren Fokus mit der virtuellen Lichtquelle 17 zusammenfällt. Die exzentrische Rotationsachse ist dabei durch die optische Achse 4 gegeben. Durch die Hauptkrümmung der Parabel 16 kann die Größe der Einzelreflektorringe 10a,b festgelegt werden. Die Bemessung des weiter außen liegenden Reflektorrings 10b erfolgt nach demselben Prinzip. Ebenso können weitere Einzelreflektorringe hinzugefügt werden. Die Aneinanderreihung zu einer optischen Vorrichtung (nicht dargestellt) kann analog zu den Figuren 1b und 2b erfolgen. Ebenso ist wiederum eine matrixartige zweidimensionale Anordnung möglich.

Um die Konstruktion und die Herstellung zu vereinfachen, können das oder die Paraboloidsegmente auch durch entsprechende Kugel- oder Kegelsegmente angenähert werden. Eine Fokussierung kann durch eine Wölbung der Lichtaustrittsfläche erreicht werden.

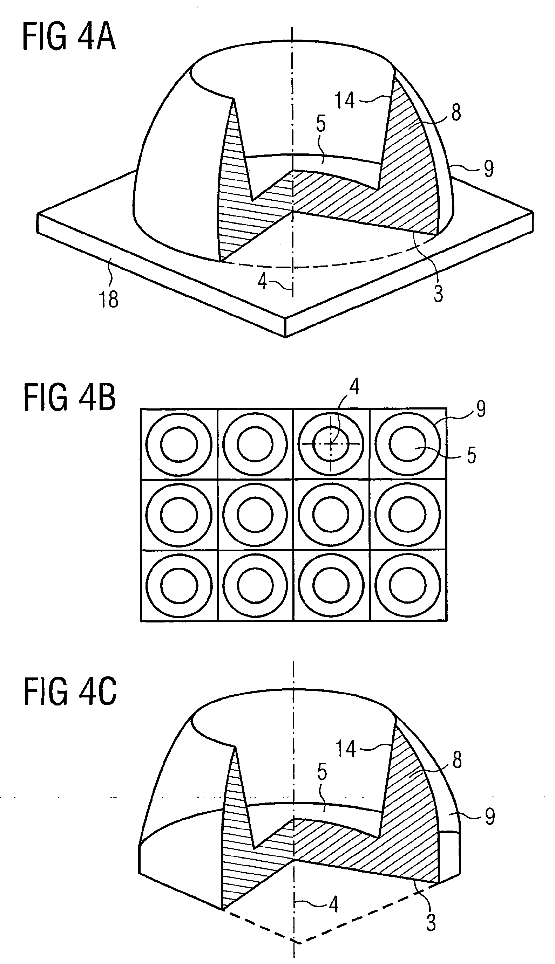

In Figur 4a ist perspektivisch ein nicht beanspruchtes Ausführungsbeispiel eines optischen Elements dargestellt, dessen Querschnitt dem ersten Ausführungsbeispiel entspricht, wobei aber die Reflektorfläche 9 rotationssymmetrisch und insbesondere parabolisch gekrümmt ist. Das gezeigte optische Element ist als Rotationskörper gebildet und im Spritzgußverfahren, beispielsweise aus PC oder PMMA hergestellt. Ein Spritzgußverfahren eignet sich insbesondere, da das gezeigte Ausführungsbeispiel keinerlei Hinterschneidungen aufweist. Um die Entkernung bei der Herstellung im Spritzgußverfahren zu erleichtern, ist die Innenflanke 14 leicht schräg zur optischen Achse 4 ausgebildet. Die sich dadurch ergebenden, geringfügigen Änderungen der Abbildungseigenschaften sind durch eine entsprechende Formgebung der Reflektorfläche 9 kompensiert.

Bei der Verwendung solcher optischer Elemente beziehungsweise Vorrichtungen im Außenbereich ist als Material UV-stabilisiertes Polycarbonat besonders geeignet.

Die optischen Elemente können beispielsweise mittels einer Trägerplatte 18 zu einer eine Mehrzahl solcher optischer Elemente umfassenden optischen Vorrichtung aneinandergereiht werden. Eine entsprechende optische Vorrichtung ist in der Aufsicht in Figur 4b dargestellt.

Vorzugsweise werden bei dem in Figur 4a gezeigten nicht beanspruchten Ausführungsbeispiel die Seitenflächen an nicht zur Abbildung beitragende Stellen abgeflacht, so daß optische Elemente entstehen, die matrix- oder rasterartig und flächenfüllend zu einer optische Vorrichtung zusammengefaßt werden können, Figur 4c. Die Aufsicht einer solchen optischen Vorrichtung entspricht im wesentlichen wiederum Figur 4b.

Die in den Figuren gezeigten optischen Vorrichtungen können durch Aneinanderfügen, beispielsweise Verkleben, von optischen Elementen gebildet werden. Bevorzugt sind die optischen Vorrichtungen einstückig, zum Beispiel im Spritzgußverfahren, hergestellt.

Weiterhin können auch mehrere optische Vorrichtungen zu optischen Modulen zusammengefaßt werden. Zur Ausbildung eines Beleuchtungssystems sind auf der Lichteintrittsseite Lumineszenzdioden wie zum Beispiel LED-Bauelemente oder LED-Chips angeordnet, wobei auf der Lichteintrittsseite bevorzugt jeweils mindestens eine Lumineszenzdiode einem optischen Element zugeordnet ist.
Die Lumineszenzdioden sind oberflächenmontierbar und vorzugsweise weiterhin auf einen gemeinsamen Träger in Form einer Platine oder einer sonstigen elektischen Anschlußplatte montiert.
Dabei ist es zweckmäßig, die Lumineszenzdioden in der Fokalebene der optischen Vorrichtung, insbesondere am Schnittpunkt von optische Achse des zugeordneten optischen Elements und Fokalebene anzuordnen.

Ein solches modulartiges Beleuchtungssystem zeichnet sich durch besonders hohe Flexibilität aus. Weiterhin ist auch die Möglichkeit gegeben, eine Mehrzahl solcher Einzelmodule dreidimensional zu Leuchtkörpern zusammenzustellen. Die Aneinanderreihung kann in allen Fällen durch Klebeverbindungen oder Steckverbindungen, die vorzugsweise ebenfalls im Spritzgußverfahren ausgebildet werden, erfolgen.

## Patentansprüche

1. Beleuchtungsanordnung mit einer optischen Vorrichtung mit einer Mehrzahl seitlich aneinandergrenzender optischer Elemente, wobei jedem optischen Element eine optische Achse (4) zugeordnet ist und jedes optische Element eine Lichteintrittsfläche (2) und eine Lichtaustrittsfläche (3) aufweist,
**dadurch gekennzeichnet, daß**
jeweils die Lichteintrittsfläche (2) in einem die optische Achse (4) umgebenden Zentralbereich (5) nach Art einer Linse gewölbt gebildet ist,
daß jeweils der Zentralbereich (5) von einem ringförmigen Reflektor (8) umgeben ist und
seitens der Lichteintrittsfläche eine oberflächenmontierbare Lumineszenzdiode angeordnet ist, und
daß zumindest bei einem Teil der optischen Elemente
- der ringförmige Reflektor aus mehreren konfokal angeordneten Einzelreflektoren (10) gebildet ist,
- der nach Art einer Linse gebildete Zentralbereich (5) und der Reflektor (8) des optischen Elements so aufeinander abgestimmt sind, daß ein Strahlungsbündel (13) einer Punktlichtquelle (12) eintrittsseitig näherungsweise in ein Parallelbündel abgebildet wird, und
- die Lichtaustrittsflächen mit (einer Rillen-, Noppen oder Punktstrukturen) zur allseitigen Streuung eines austretenden Strahlungsbündels versehen sind, die eine gleichmäßige Leuchtdichteverteilung bewirkt.

2. Beleuchtungsanordnung nach Anspruch 1,
**dadurch gekennzeichnet, daß**
wenigstens ein Reflektor (8) eine Reflektorfläche (9) aufweist, die zumindest in einem Teilbereich totalreflektierend ist.

3. Beleuchtungsanordnung nach einem der Ansprüche 1 bis 2,
**dadurch gekennzeichnet, daß**
zumindest bei einem Teil der optischen Elemente die Zentralbereiche (5) als asphärische Linsen gebildet sind.

4. Beleuchtungsanordnung nach einem der Ansprüche 1 bis 3,
**dadurch gekennzeichnet, daß**
wenigstens ein Reflektor (8) eine Reflektorfläche (9) aufweist, die zumindest in Teilbereichen als Oberfläche eines Kegelsegments geformt ist.

5. Beleuchtungsanordnung nach einem der Ansprüche 1 bis 4,
**dadurch gekennzeichnet, daß**
wenigstens ein Reflektor (8) eine Reflektorfläche (9) aufweist, die zumindest in Teilbereichen als Oberfläche eines Paraboloidsegments geformt ist.

6. Beleuchtungsanordnung nach einem der Ansprüche 1 bis 5,
**dadurch gekennzeichnet, daß**
wenigstens ein Reflektor (8) eine Reflektorfläche (9) aufweist, die zumindest in Teilbereichen als Oberfläche eines Ellipsoidsegments geformt ist.

7. Beleuchtungsanordnung nach einem der Ansprüche 1 bis 6,
**dadurch gekennzeichnet, daß**
die optischen Achsen (4) der optischen Elemente parallel zueinander sind.

8. Beleuchtungsanordnung nach einem der Ansprüche 1 bis 7,
**dadurch gekennzeichnet, daß**
die optischen Elemente dieselbe Form aufweisen.

9. Beleuchtungsanordnung nach einem der Ansprüche 1 bis 8,
**dadurch gekennzeichnet, daß**
zumindest bei einem Teil der optischen Elemente der nach Art einer Linse gebildete Zentralbereich (5) und die Reflektorfläche (9) konfokal angeordnet sind.

10. Beleuchtungsanordnung nach einem der Ansprüche 1 bis 9,
**dadurch gekennzeichnet, daß** zumindest ein Teil der Lichtaustrittsflächen (3) eben ausgebildet ist.

11. Beleuchtungsanordnung nach einem der Ansprüche 1 bis 9,
**dadurch gekennzeichnet, daß** zumindest ein Teil der Lichtaustrittsflächen (3) gewölbt oder gekrümmt ausgebildet ist.

12. Beleuchtungsanordnung nach einem der Ansprüche 1 bis 11,
**dadurch gekennzeichnet, daß**
die Lichtaustrittsflächen (3) zumindest teilweise aufgerauht sind.

13. Beleuchtungsanordnung nach einem der Ansprüche 1 bis 12,
**dadurch gekennzeichnet, daß**
die optischen Elemente zumindest teilweise eine rotationssymmetrische Grundform aufweisen.

14. Beleuchtungsanordnung nach Anspruch 13,
**dadurch gekennzeichnet, daß**
die rotationsymmetrische Grundform umfangsseitig mit Abflachungen versehen ist.

15. Beleuchtungsanordnung nach Anspruch 14,
**dadurch gekennzeichnet , daß**
die Abflachungen eine flächenfüllende seitliche Aneinanderreihung der optischen Elemente ermöglichen.

16. Beleuchtungsanordnung nach einem der Ansprüche 1 bis 15,
**dadurch gekennzeichnet, daß**
die optische Vorrichtung einen strahlungsdurchlässigen Kunststoff enthält.

17. Beleuchtungsanordnung nach Anspruch 16,
**dadurch gekennzeichnet, daß**
die optische Vorrichtung ein Reaktionsharz, insbesondere ein Acrylharz oder ein Polykarbonat, enthält.

18. Beleuchtungsanordnung mit einer optischen Vorrichtung nach einem der Ansprüche 1 bis 17,
**dadurch gekennzeichnet, daß**
die Lumineszenzdiode im Fokalbereich von einem der optischen Elemente angeordnet ist.

19. Beleuchtungsanordnung nach Anspruch 18,
**dadurch gekennzeichnet, daß**
auf der Seite der Lichteintrittsfläche (2) eine Mehrzahl von Lumineszenzdioden angeordnet ist, die den optischen Elementen zugeordnet sind.

20. Beleuchtungsanordnung nach Anspruch 19,
**dadurch gekennzeichnet, daß**
die Lumineszenzdioden im Fokalbereich des jeweils zugeordneten optischen Elemente angeordnet sind.

## Claims

1. Illumination arrangement having an optical apparatus with a plurality of laterally coterminous optical elements, wherein an optical axis (4) is assigned to each optical element and each optical element has a light entrance face (2) and a light exit face (3), **characterized in that**
the light entrance face (2) in each case is designed such that it is curved in the manner of a lens in a central region (5) surrounding the optical axis (4),
**in that** the central region (5) in each case is surrounded by an annular reflector (8) and
a surface-mountable luminescence diode is arranged on the light entrance face side,
and **in that** for at least some of the optical elements
- the annular reflector is formed by a plurality of confocally arranged individual reflectors (10),
- the central region (5), which is formed in the manner of a lens, and the reflector (8) of the optical element are matched to one another such that a beam of rays (13) from a point light source (12) is projected approximately into a parallel beam on the entrance side, and
- the light exit faces are provided with a groove structure, a stud structure or a point structures for omnidirectional scattering of an exiting radiation beam, which causes a uniform luminance distribution.

2. Illumination arrangement according to Claim 1, **characterized in that**
at least one reflector (8) has a reflector face (9) which is totally reflective at least in one subregion.

3. Illumination arrangement according to either of Claims 1 or 2, **characterized in that**
the central regions (5) are designed as aspherical lenses at least in some of the optical elements.

4. Illumination arrangement according to one of Claims 1 to 3, **characterized in that**
at least one reflector (8) has a reflector face (9) which is shaped, at least in subregions, as the surface of a cone segment.

5. Illumination arrangement according to one of Claims 1 to 4, **characterized in that**
at least one reflector (8) has a reflector face (9) which is shaped, at least in subregions, as the surface of a paraboloid segment.

6. Illumination arrangement according to one of Claims 1 to 5, **characterized in that**
at least one reflector (8) has a reflector face (9) which is shaped, at least in subregions, as the surface of an ellipsoid segment.

7. Illumination arrangement according to one of Claims 1 to 6, **characterized in that**
the optical axes (4) of the optical elements are mutually parallel.

8. Illumination arrangement according to one of Claims 1 to 7, **characterized in that**
the optical elements have the same shape.

9. Illumination arrangement according to one of Claims 1 to 8, **characterized in that**,
at least for some of the optical elements, the central region (5), which is designed in the manner of a lens, and the reflector face (9) are arranged confocally.

10. Illumination arrangement according to one of Claims 1 to 9, **characterized in that**
at least some of the light exit faces (3) are planar.

11. Illumination arrangement according to one of Claims 1 to 9, **characterized in that**
at least some of the light exit faces (3) are curved or domed.

12. Illumination arrangement according to one of Claims 1 to 11, **characterized in that**
the light exit faces (3) are at least partially roughened.

13. Illumination arrangement according to one of Claims 1 to 12, **characterized in that**
the optical elements have a rotationally symmetrical basic shape at least in places.

14. Illumination arrangement according to Claim 13, **characterized in that**
the rotationally symmetrical basic shape is provided with flats on its periphery.

15. Illumination arrangement according to Claim 14, **characterized in that**
the flats allow the optical elements to be arranged in a row or rows alongside one another.

16. Illumination arrangement according to one of Claims 1 to 15, **characterized in that**
the optical apparatus contains a radiation-transmissive plastic.

17. Illumination arrangement according to Claim 16, **characterized in that**
the optical apparatus contains a reaction resin, in particular an acrylic resin or a polycarbonate.

18. Illumination arrangement with an optical apparatus according to one of Claims 1 to 17, **characterized in that**
the luminescence diode is arranged in the focal region of one of the optical elements.

19. Illumination arrangement according to Claim 18, **characterized in that**
a plurality of luminescence diodes are arranged on the side of the light entrance face (2), and are associated with the optical elements.

20. Illumination arrangement according to Claim 19, **characterized in that**
the luminescence diodes are arranged in the focal region of the respectively associated optical element.

## Revendications

1. Système d'éclairage doté d'un dispositif optique qui présente plusieurs éléments optiques disposés en positions adjacentes les uns à côté des autres, un axe optique (4) étant associé à chaque élément optique et chaque élément optique présentant une surface (2) d'entrée de lumière et une surface (3) de sortie de lumière,
**caractérisé en ce que** dans une zone centrale (5) qui entoure l'axe optique (4), chaque surface (2) d'entrée de lumière a une configuration bombée à la manière d'une lentille,
**en ce que** chaque zone centrale (5) est entourée par un réflecteur annulaire (8),
**en ce qu'**une diode luminescente apte à être montée en surface est disposée du côté de la surface d'entrée de lumière, et
**en ce qu'**au moins pour une partie des éléments optiques :
- le réflecteur annulaire est formé de plusieurs réflecteurs individuels (10) disposés en positions confocales,
- la zone centrale (5) configurée à la manière d'une lentille et le réflecteur (8) de l'élément optique sont accordés l'un à l'autre de telle sorte qu'un faisceau de rayonnement (13) d'une source (12) de lumière ponctuelle est transformé approximativement en faisceau parallèle au côté de l'entrée et
- les surfaces de sortie de lumière sont dotées d'une structure en rainures, en boutons ou en points pour disperser de manière omnidirectionnelle un faisceau de rayonnement sortant, avec pour effet une répartition uniforme de la densité d'éclairage.

2. Système d'éclairage selon la revendication 1, **caractérisé en ce qu'**au moins un réflecteur (8) présente une surface réfléchissante (9) dont au moins une partie est totalement réfléchissante.

3. Système d'éclairage selon l'une des revendications 1 à 2, **caractérisé en ce qu'**au moins dans une partie des éléments optiques, les zones centrales (5) sont configurées sous la forme de lentilles asphériques.

4. Système d'éclairage selon l'une des revendications 1 à 3, **caractérisé en ce qu'**au moins un réflecteur (8) présente une surface réfléchissante (9) dont au moins certaines parties sont configurées sous la forme d'un segment de cône.

5. Système d'éclairage selon l'une des revendications 1 à 4, **caractérisé en ce qu'**au moins un réflecteur (8) présente une surface réfléchissante (9) dont au moins certaines parties sont configurées sous la forme d'un segment de paraboloïde.

6. Système d'éclairage selon l'une des revendications 1 à 5, **caractérisé en ce qu'**au moins un réflecteur (8) présente une surface réfléchissante (9) dont au moins certaines parties sont configurées sous la forme d'un segment d'ellipsoïde.

7. Système d'éclairage selon l'une des revendications 1 à 6, **caractérisé en ce que** les axes optiques (4) des éléments optiques sont parallèles les uns aux autres.

8. Système d'éclairage selon l'une des revendications 1 à 7, **caractérisé en ce que** les éléments optiques ont la même forme.

9. Système d'éclairage selon l'une des revendications 1 à 8, **caractérisé en ce que** pour au moins une partie des éléments optiques, la zone centrale (5) configurée à la manière d'une lentille et la surface réfléchissante (9) sont confocales.

10. Système d'éclairage selon l'une des revendications 1 à 9, **caractérisé en ce qu'**au moins une partie des surfaces (3) de sortie de lumière a une configuration plane.

11. Système d'éclairage selon l'une des revendications 1 à 9, **caractérisé en ce qu'**au moins une partie des surfaces (3) de sortie de lumière a une configuration bombée ou courbée.

12. Système d'éclairage selon l'une des revendications 1 à 11, **caractérisé en ce qu'**au moins certaines parties des surfaces (3) de sortie de lumière sont rugueuses.

13. Système d'éclairage selon l'une des revendications 1 à 12, **caractérisé en ce qu'**au moins certaines parties des éléments optiques ont une forme de base à symétrie de rotation.

14. Système d'éclairage selon la revendication 13, **caractérisé en ce que** la forme de base à symétrie de rotation est dotée de méplats à sa périphérie.

15. Système d'éclairage selon la revendication 14, **caractérisé en ce que** les méplats permettent de ranger les éléments optiques les uns à côté des autres de manière à remplir une surface.

16. Système d'éclairage selon l'une des revendications 1 à 15, **caractérisé en ce que** le dispositif optique contient une matière synthétique perméable au rayonnement.

17. Système d'éclairage selon la revendication 16, **caractérisé en ce que** le dispositif optique contient une résine réactive et en particulier une résine acrylique ou un polycarbonate.

18. Système d'éclairage doté d'un dispositif optique selon l'une des revendications 1 à 17, **caractérisé en ce que** la diode luminescente est disposée dans la zone focale de l'un des éléments optiques.

19. Système d'éclairage selon la revendication 18, **caractérisé en ce que** plusieurs diodes luminescentes associées aux éléments optiques sont disposées sur le côté de la surface (2) d'entrée de la lumière.

20. Système d'éclairage selon la revendication 19, **caractérisé en ce que** les diodes luminescentes sont disposées dans la zone focale de l'élément optique respectif qui leur est associé.
